Europäisches Patentamt

European Patent Office

Office européen des brevets

(11) Veröffentlichungsnummer: **0 226 131 B1**

# EUROPÄISCHE PATENTSCHRIFT

(45) Veröffentlichungstag der Patentschrift: **17.06.92**

(51) Int. Cl.⁵: **B60C 27/06**, B60C 27/20

(21) Anmeldenummer: **86116832.6**

(22) Anmeldetag: **03.12.86**

(54) **Schneekette für Fahrzeugräder.**

(30) Priorität: **20.12.85 DE 3545529**

(43) Veröffentlichungstag der Anmeldung:
**24.06.87 Patentblatt 87/26**

(45) Bekanntmachung des Hinweises auf die
Patenterteilung:
**17.06.92 Patentblatt 92/25**

(84) Benannte Vertragsstaaten:
**AT BE CH DE ES FR GB GR IT LI LU NL SE**

(56) Entgegenhaltungen:
**DE-B- 545 151**
**US-A- 4 388 754**

(73) Patentinhaber: **AUTOTYP S.A.**
**Case Postale 53 Route de Lausanne**
**CH-1037 Etagnières(CH)**

(72) Erfinder: **Ilon, Bengt Erland**
**Schädrütihalde 4**
**CH-6006 Luzern(CH)**

(74) Vertreter: **Rottmann, Maximilian R.**
**c/o Rottmann, Ouehl & Zimmermann AG**
**Glattalstrasse 37**
**CH-8052 Zürich(CH)**

## Beschreibung

Die Erfindung betrifft eine Schneekette für Fahrzeugräder, wobei die Schneekette zwei Gliederteile aufweist, die längs der Umfangslauffläche des Fahrzeugrades verlaufen sollen, wenn die Schneekette am Fahrzeugrad montiert ist, und wobei die Schneekette Querstäbe hat, die die Gliederteile untereinander verbinden und die quer zu der Lauffläche verlaufen sollen, wenn die Schneekette am Fahrzeugrad montiert ist. Ferner ist die Schneekette vorzugsweise an gegenseitig zusammenklappbaren Armen montiert, welche mittels einer Einziehvorrichtung in eine Stellung in unmittelbarer Nähe einer Stirnseite des Fahrzeugrades einziehbar sind.

Schneeketten der eingangs beschriebenen Art sind aus der USA-Patentschrift 4 388 754 bereits bekannt. Diese bekannten Schneeketten haben Querstäbe in der Form von steifen Drähten oder Rundeisen von hauptsächlich kreisförmigem Querschnitt. Die Endpartien der Drähte oder Rundeisen sind zu Ösen gebogen, durch welche Glieder der Kette mit Spiel laufen.

Es hat sich gezeigt, daß Querstäbe von dieser Ausbildung nicht den "Griff" gewähren, den man beim Fahren auf glatter Oberfläche (Fahrbahn) von der Schneekette verlangt. Dieses Problem läßt sich dadurch lösen, daß den Querstäben ein länglicher Querschnitt gegeben wird und die Querstäbe derart angebracht werden, daß sie auf der Lauffläche des Reifens eine aufrechte Stellung einnehmen, wenn die Schneekette am Fahrzeugrad montiert ist. Hierbei entsteht aber ein anderes Problem, und zwar, daß die Querstäbe nicht in der aufrechten Stellung verbleiben, wenn sie auf die Oberfläche (Fahrbahn) auftreffen, sondern sich in liegende Stellung umdrehen, wodurch die beabsichtigte Verbesserung ganz oder teilweise verloren geht.

Aufgabe der Erfindung ist, dieses Problem zu beseitigen und mit einfachen Mitteln zu bewirken, daß die Querstäbe hauptsächlich in vorausbestimmten Stellungen im Verhältnis zur Lauffläche des Fahrzeugrades festgehalten werden. Erfindungsgemäß wird dies im wesentlichen mittels der aus dem Patentanspruch 1 ersichtlichen Merkmale zustandegebracht.

Dank dem Umstand, daß die Querstäbe nichtdrehbar mit den genannten Gliederteilen verbunden sind, halten die Gliederteile sie hauptsächlich in ihren beispielsweise aufrechten Stellungen fest, weil die Gliederteile an einem Abheben von der Lauffläche gehindert werden, indem sie beim Umlauf des Fahrzeugrades gegen die Lauffläche gestreckt gehalten werden und indem die Oberfläche (Fahrbahn) und/oder daraufliegender Schnee, Eis oder dgl., die Gliederteile gegen die Lauffläche andrückt. Ein anderer Vorteil, der durch die nichtdrehbare Verbindung der Querstäbe mit den Gliederteilen erzielt wird, besteht darin, daß Kettenglieder der Gliederteile an einem gegenseitigen Drehen über ein gewisses Maß hinaus gehindert werden.

Die Unteransprüche betreffen vorteilhafte Ausgestaltungen der Erfindung.

Anhand der Zeichnungen wird die Erfindung beispielsweise näher erläutert. Es zeigen:

Fig. 1    eine perspektivische Ansicht eines Kettenabschnittes einer erfindungsgemäßen Schneekette,

Fig. 2    einen Grundriß des in Fig. 1 dargestellten Kettenabschnittes,

Fig. 3    einen Grundriß von Teilen der in Fig. 1 dargestellten Schneekette,

Fig. 4    einen Schnitt nach der Linie IV-IV in Fig. 3,

Fig. 5    einen Schnitt nach der Linie V - V in Fig. 4,

Fig. 6    eine Seitenansicht eines Fahrzeugrades mit einer auf das Rad aufgelegten Schneekette gemäß Fig. 1,

Fig. 7    eine perspektivische Ansicht einer auf das Rad aufgelegten Schneekette gemäß Fig. 1, bevor die Kette eingezogen ist,

Fig. 8    eine perspektivische Ansicht einer auf das Rad aufgelegten Schneekette gemäß Fig. 1, nachdem die Kette, mit ihren Gliederteilen auf der Radlauffläche liegend, an das Rad eingezogen ist, und

Fig. 9    eine perspektivische Ansicht der die Schneekette gemäß Fig. 1 haltenden Arme in zusammengeklappter Lage.

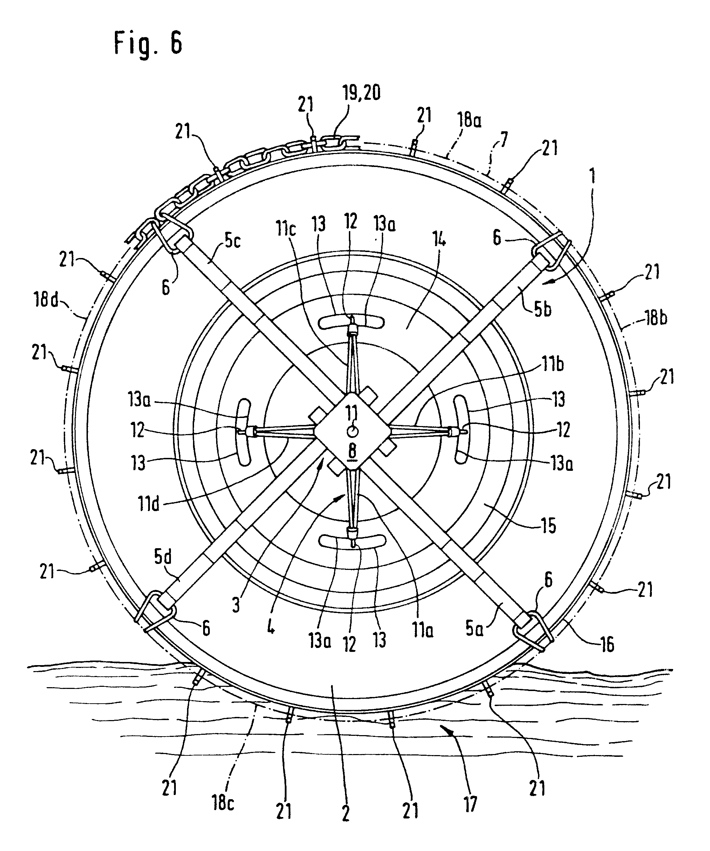

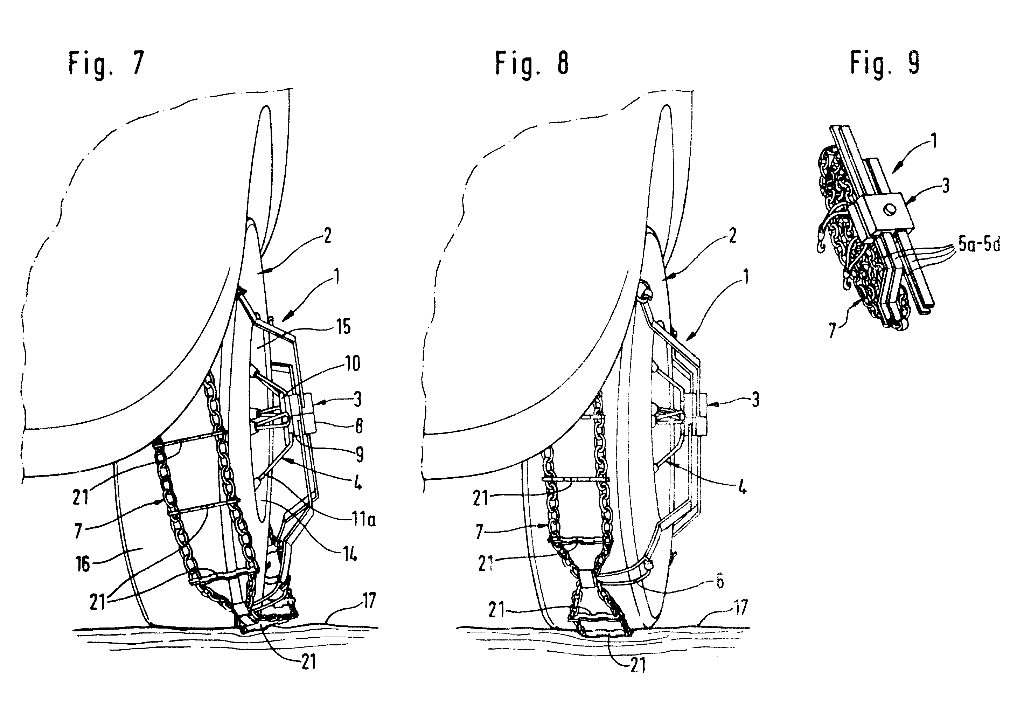

Die Figuren zeigen eine Rutschsicherungsvorrichtung 1 für Fahrzeugräder. Die Rutschsicherungsvorrichtung 1 weist einen Mittelteil 3 mit einer Einziehvorrichtung 4 und Arme 5a-5d mit Bügeln 6 auf, auf denen eine Schneekette 7 angebracht ist. Der Mittelteil 3 hat drei Platten 8, 9 und 10, die auf einem Bolzen 11 (siehe Fig. 6) drehbar gelagert sind. Die Platte 8 weist Nuten für die Arme 5a und 5b auf, während die Platte 9 Nuten für die Arme 5c und 5d aufweist. Die Einziehvorrichtung 4 hat vier Gummiriemen 11a-11d, die an der Platte 10 angeordnet sind und Hakenteile 12 aufweisen, die in Löcher 13 in der Felge 14 des Rades 2 einführbar sind, um an den Kanten 13a der Löcher 13 festgehakt zu werden. Die Montage der Rutschsicherungsvorrichtung 1 erfolgt dadurch, daß sie mit der Schneekette 7 auf der Radlauffläche 16 oben auf dem Rad 2 liegend an der Stirnseite 15 des Rades 2 angebracht wird, während die Schneekette in unmittelbarer Nähe der Radlauffläche 16 an den unteren, an der Oberfläche 17 (Fahrbahn) anliegenden Radteilen plaziert wird. Danach werden die Gummiriemen 11a-11d ausgedehnt, um an der Felge 14 festgehakt zu werden (siehe Fig. 7).

Die noch nicht auf der Lauffläche 16 befindlichen Teile der Schneekette 7 werden dann in Position gezogen, wenn das Fahrzeugrad 2 durch Anfahren des Fahrzeugs abrollt. Dabei wird nämlich die Schneekette 7 die Bewegung des Rades 2 mitmachen, und wenn die noch nicht auf die Lauffläche 16 eingezogenen Teile der Schneekette von der Oberfläche 17 frei sind, werden die Gummiriemen 11a-11d diese noch nicht eingezogenen Teile der Schneekette 7 mittels der Arme 5a-5d einziehen, bis die ganze Schneekette in eine den Umfang der Lauffläche 16 umgebende Lage eingezogen ist (siehe Fig. 8).

Die Gummiriemen 11a-11d halten die Rutschsicherungsvorrichtung 1 in deren Wirkungslage am Fahrzeugrad 2 beim Fahren fest. Zur Demontage der Rutschsicherungsvorrichtung 1 werden ganz einfach die Gummiriemen 11a-11d von der Felge 14 losgemacht, wonach die Rutschsicherungsvorrichtung 1 von selbst vom Rad 2 herabfällt, wenn das Fahrzeug ein Stück fortbewegt wird, so daß das Rad 2 einige Umdrehungen ausführt.

Die Rutschsicherungsvorrichtung 1 läßt sich zu einem kleinen Paket zusammenklappen, das leicht in einem Raum des Fahrzeugs verstaut werden kann. Dies ist dadurch möglich, daß die Platten 8 und 9 gegenseitig drehbar sind, so daß sämtliche Arme 5a-5d in parallele Lagen gebracht werden können. Die Arme 5a-5d sind auch in den Platten 8, 9 verschiebbar, so daß das Paket nicht länger wird als die Länge eines der Arme 5a-5d (siehe Fig. 9).

Die Schneekette 7 weist vier Kettenabschnitte 18a-18d auf, von denen jeder Abschnitt zwischen zweien der Bügel 6 verläuft und an diesen angebracht ist. Jeder Kettenabschnitt 18a-18d weist zwei Gliederteile 19 und 20 auf, die längs der Lauffläche 16 in Umfangsrichtung verlaufen sollen. Die Gliederteile 19, 20 in jedem Kettenabschnitt 18a-18d sind mittels vier Querstäben 21 miteinander verbunden, welche quer zur Umfangsrichtung der Lauffläche verlaufen sollen. Jeder Querstab besteht aus einem langgestreckten Flacheisen, von denen zwei gegenüberliegende Längskanten 22, 23 Erhöhungen 24 und dazwischenliegende Vertiefungen 25 aufweisen. Die Erhöhungen 24 an der einen Kante 22 liegen den Vertiefungen 25 in der anderen Kante 23 im wesentlichen bezüglich ihrer Mitten gegenüber, während die Vertiefungen 25 an der einen Kante 22 den Erhöhungen 24 in der anderen Kante 23 im wesentlichen bezüglich ihrer Mitten gegenüberliegen.

Jeder Querstab 21 weist an jedem seiner zwei Endteile zwei Klemmenteile 26 und 27 auf, die zwischen sich eine an dem einen Ende offene Ausnehmung 28 bilden, die von einer etwas größeren Tiefe ist als die Breite der ovalen Kettenglieder 29, die die Gliederteile 19, 20 bilden.

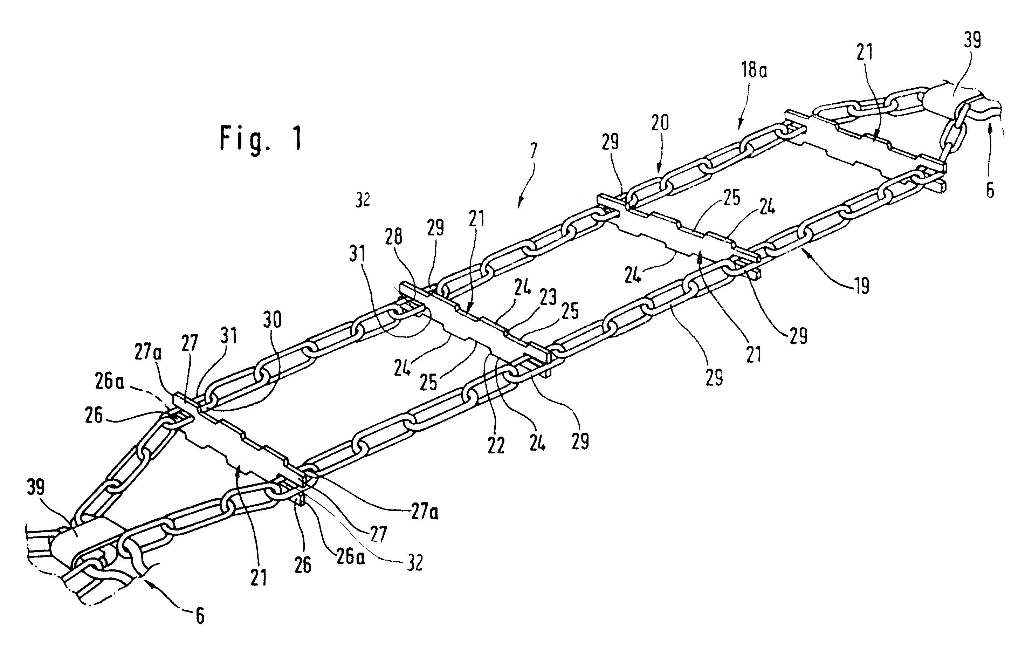

Jeder Gliederteil 19 bzw. 20 wird dadurch gebildet, daß beispielsweise das vierte Kettenglied 29, von dem einen Ende des Gliederteils 19 aus gerechnet, in liegender Stellung in eine der Ausnehmungen 28 der Querstäbe 21 eingeführt wird, bis der eine 30 von dessen beiden im wesentlichen parallel zueinander verlaufenden Kettengliedteile 30 und 31 am Boden 32 der Ausnehmung 28 anliegt. Nach diesem Arbeitsvorgang werden die Endteile 26a, 27a der Klemmenteile 26, 27 an dem in der Ausnehmung 28 am äußersten liegenden Kettengliedteil 31 vorbei ein Stück weit hinausragen. Danach werden die Klemmenteile 26, 27 maschinell zusammengedrückt, so daß sie das Kettenglied 29 in der liegenden Stellung zwischen sich festklemmen. Bei diesem maschinellen Festklemmen des Kettengliedes 29 werden außerdem die außerhalb des Kettengliedteils 31 liegenden Endteils 26a, 27a der Klemmenteile 26, 27 gegeneinander gebogen, bis sie auch von außen an dem Kettengliedteil 31 anliegen. Durch die Festklemmung des Kettengliedes 29 mittels der Klemmenteile 26, 27 und durch die Einwärtsbiegung der Endteile 26a, 27a lassen sich das Kettenglied 29 und der Querstab 21 in keiner Ebene gegenseitig drehen, sondern das Kettenglied 29 und der Querstab 21 sitzen vollständig nichtdrehbar aneinander fest. Danach kann der andere Gliederteil 20 in derselben Weise in der anderen Ausnehmung 28 des Querstabes 21 fixiert werden. Der nächste Querstab 21 kann danach beispielsweise an dem fünften Kettenglied 29 der Gliederteile 19, 20, von dem bereits nichtdrehbar an einem Querstab 21 angebrachten Kettenglied 29 aus gerechnet, nichtdrehbar angebracht werden. Zuvor können die Gliederteile 19, 20 derart gedreht werden, daß sie zwischen den nichtdrehbar mit den Querstäben 21 verbundenen Kettengliedern 29 zu der Lauffläche 16 verschiedene Winkel einnehmen. Dies läßt sich tun, indem die fünf Kettenglieder 29 an dem Querstab 21 zunächst in eine Ausgangslage gestellt werden, wobei die Kettenglieder 29 abwechselnd liegende und aufrechte Stellungen einnehmen. Danach wird das fünfte Kettenglied 29 aus seiner liegenden Stellung um eine volle Umdrehung in eine liegende Stellung gedreht, was bedeutet, daß sich die vier anderen Kettenglieder 29 auch drehen und sich in verschiedene Winkellagen zueinander stellen (siehe Fig. 1). Nach Vollführung dieser Drehung wird das fünfte Kettenglied 29 nichtdrehbar an einem Querstab 21 befestigt, wonach der Gliederteil 20 in derselben Weise gedreht wird und auch sein fünftes Kettenglied 29, von dem bereits befestigten Kettenglied 29 aus gerechnet, nichtdrehbar an dem zweiten Querstab 21 befestigt wird. Der dritte und vierte Querstab 21 wird in derselben Weise wie der erste und zweite nichtdrehbar mit den Kettengliedern 29 der Gliederteile 19, 20 verbunden, wobei die Gliederteile 19, 20 zwischen allen Querstäben 21 zweckmäßigerweise in der oben angegebenen Weise gedreht sind.

Wie beispielsweise aus Fig. 1 hervorgeht, sind sämtliche Querstäbe 21 identisch und zweckmäßigerweise in besonderen Lagen im Verhältnis zueinander angebracht, und zwar so, daß die Erhöhungen 24 eines der Querstäbe 21, in der Längsrichtung der Gliederteile gesehen, den Vertiefungen 25 des benachbarten Querstabes 21 im wesentlichen bezüglich der Mitten gegenüberliegen, während die Vertiefungen 25 des erstgenannten Querstabes 21 den Erhöhungen des letztgenannten Querstabes 21 im wesentlichen bezüglich der Mitten gegenüberliegen: Dies wird dadurch erzielt, daß jeder Querstab 21 nach Drehung um 180° im Verhältnis zu einem benachbarten Querstab 21 nichtdrehbar an den Gliederteilen 19, 20 befestigt ist.

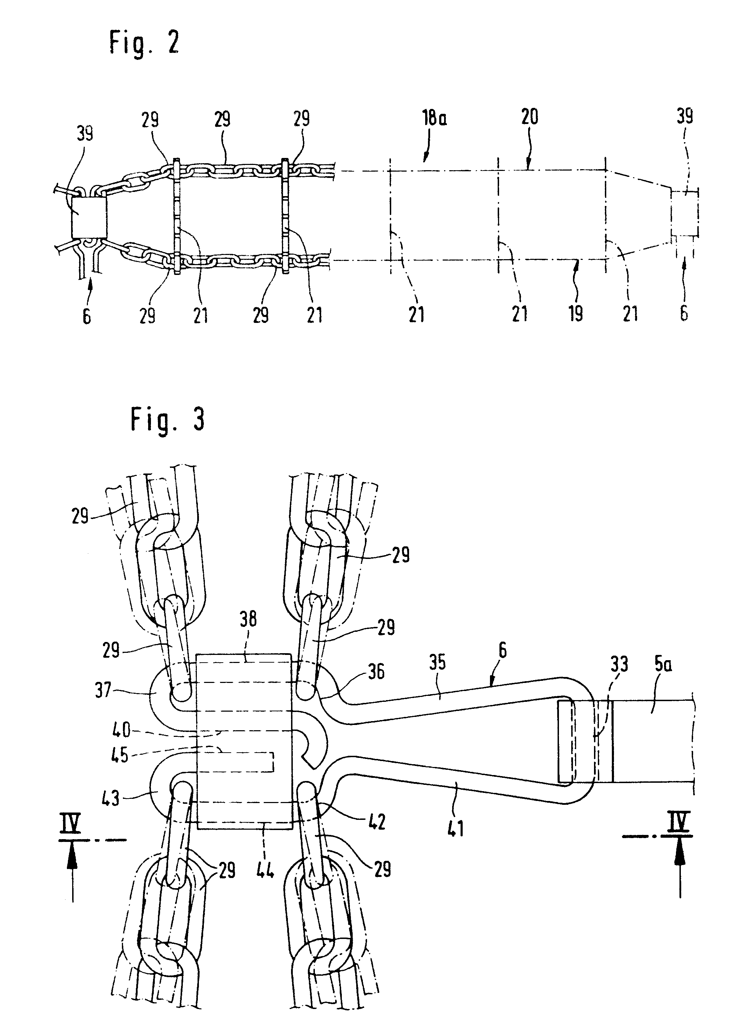

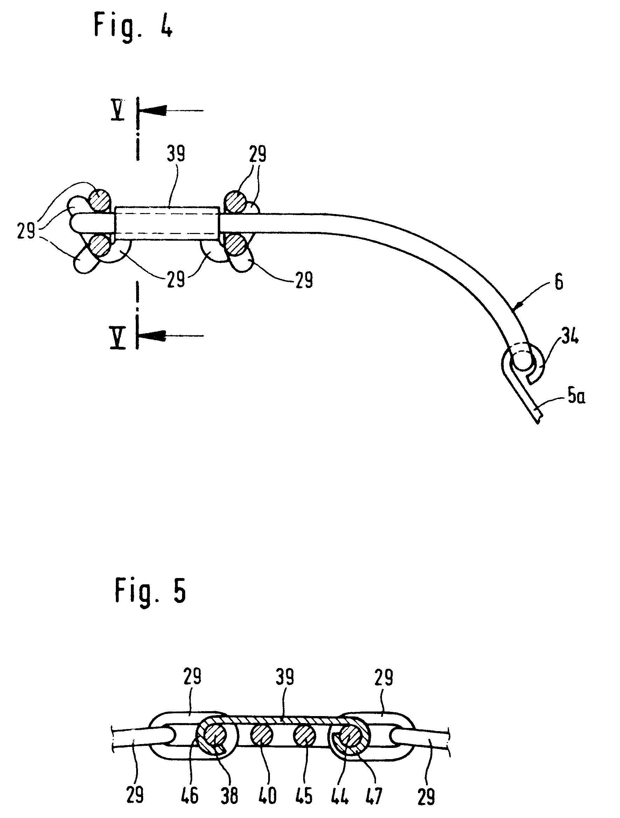

Wie beispielsweise aus Fig. 3 hervorgeht, besteht jeder Bügel 6 aus einem im wesentlichen in U-Form gebogenen Teil aus federndem Material, z.B. Federstahl. Der Steg 33 des Bügels 6 ragt drehbar durch einen gebogenen Endteil 34 (siehe Fig. 4) des jeweiligen Armes 5a-5d hindurch. Der eine Bügelschenkel 35 bildet einen durch den Bügelteil 36, 37 begrenzten Abschnitt 38 zur Aufnahme von zwei Kettengliedern 29 und einem Verriegelungsglied 39 (siehe auch Fig. 2) zum Verriegeln der Kettenglieder 29 in bestimmten Lagen auf dem Abschnitt 38. Der Bügelteil 37 besitzt außerdem eine Verlängerung 40, die etwa parallel zum Abschnitt 38 verläuft und in einem kleinen Abstand vom Bügelteil 36 endigt.

Der andere Bügelschenkel 41 bildet einen durch Bügelteile 42, 43 begrenzten Abschnitt 44 zur Aufnahme von zwei Kettengliedern 29 und dem Verriegelungsglied 39 zum Verriegeln der Kettenglieder 29 in bestimmten Lagen auf dem Abschnitt 44. Der Bügelteil 43 besitzt außerdem eine Verlängerung 45, die etwa parallel zum Abschnitt 44 verläuft und in einem derart großen Abstand vom Bügelteil 42 endet, daß die Kettenglieder 29 leicht auf die Verlängerung 45 aufgesteckt werden können.

Die Montage der Gliederteile 19, 20 auf den Bügeln 6 geht in der Weise vor sich, daß zuerst das eine Endglied 29 des Gliederteils 19 und dann das eine Endglied 29 des Gliederteils 20 auf den Bügelschenkel 35 aufgesteckt wird. In entsprechender Weise wird das Endglied 29 des Gliederteils 19 des nachfolgenden Kettenabschnittes und darauf das Endglied 29 des Gliederteils 20 auf den Bügelschenkel 41 aufgesteckt. Danach wird das Verriegelungsgliedes 39 zwischen den Endgliedern 29, z.B. des Abschnittes 38 angebracht, so daß ein Flanschteil 46 (siehe auch Fig. 5) des Verriegelungsgliedes 39 auf der Außenseite des Abschnittes 38 zu liegen kommt, wonach die Bügelschenkel 35, 41 von Hand aufeinander zu gepreßt werden, bis das Verriegelungsglied 39 so weit zwischen die Kettenglieder 29 des Abschnittes 44 hintergepreßt werden kann, daß ein zweiter Flanschteil 47 des Verriegelungsgliedes auf der Außenseite des Abschnittes 44 zu liegen kommt. Indem man dann die Bügelschenkel 35, 41 losläßt und sie in die Ausgangslage zurückfedern läßt, werden sie unter Druck an den Flanschteilen 46, 47 des Verriegelungsgliedes 39 anliegen und dadurch das Verriegelungsglied 39 an dem Bügel 6 festhalten, wobei das Verriegelungsglied 39 seinerseits die Kettenglieder 29 daran hindert, die jeweiligen Abschnitte 38, 44 zu verlassen. Wenn jeder Kettenabschnitt 18a-18d in der oben beschriebenen Weise auf den Bügeln montiert worden ist, ist die Schneekette 7 anwendungsbereit.

Die Länge der Schneekette 7 kann zur Anpassung an ein Fahrzeugrad 2 einer gewissen Größe schnell reduziert werden, indem das Verriegelungsglied 39 von dem Abschnitt 44 des Bügels 6 gelöst wird und die darauf aufgesteckten Kettenglieder 29 abgenommen werden. Die Kettenendglieder 29 können sodann von den übrigen Kettengliedern 29 beispielsweise abgekniffen werden und diejenigen Kettenglieder 29, die danach die Endglieder 29 bilden, können auf den Abschnitt 44 aufgesteckt werden, worauf das Verriegelungsglied wieder in die Verriegelungslage gebracht wird.

Dank dem Umstand, daß die Querstäbe 21 und die Gliederteile 19, 20 nichtdrehbar miteinander verbunden sind, können die Gliederteile 19, 20 dazu benutzt werden, die Querstäbe in ihren vorausbestimmten, im wesentlichen aufrechten Stellungen im Verhältnis zur Lauffläche 16 zu halten (siehe Fig. 6), in welchen Stellungen sie den besten "Griff" auf der Oberfläche (Fahrbahn) ergeben. Die Querstäbe 21 ergeben einen besonders guten Griff, falls sie, mit den Erhöhungen bzw. den Vertiefungen in der oben angegebenen Weise ausgerichtet, angebracht sind, und die Gliederteile 19, 20 ergeben einen besonders guten Griff, falls sie in der oben beschriebenen Weise gedreht sind.

Als alternative Ausführungen seien erwähnt, daß die Querstäbe 21 und die Gliederteile 19, 20 in einer anderen Weise als der dargestellten miteinander nichtdrehbar verbunden sein können, z.B. durch Festklemmung in anderen gegenseitigen Lagen, oder durch Festnietung oder Festschweißung. Es ist auch möglich, den Querstab als eine Einheit mit zwei festen Teilen auszubilden, von denen jeder Teil auf zwei Kettengliedern 29 in jedem Gliederteil 19, 20 anbringbar ist. Selbstverständlich kann die Anzahl Kettenabschnitte, Gliederteile je Kettenabschnitt und Querstäbe je nach Bedarf variieren. Auch die Querschnitts- und sonstige Form der Querstäbe 21 kann variieren, so kann z.B. die Querschnittsform ellipsenähnlich oder ggf. quadratisch sein, jedoch ist eine im wesentlichen rechteckige Querschnittsform gewöhnlich am vorteilhaftesten. Die Erhöhungen und Vertiefungen der Querstäbe 21 können eventuell weggelassen werden oder eine andere Form haben, und die Gliederteile 19, 20 brauchen nicht notwendigerweise zwischen den Querstäben 21 verdreht zu sein.

Es ist vorteilhaft, die erfindungsgemäße Schneekette 7 in Verbindung mit Rutschsicherungsvorrichtungen mit einem Mittelteil 3, einer Einziehvorrichtung 4 und Armen 5a-5d der dargestellten oder ähnlichen Art zu verwenden, aber die erfindungsgemäße Schneekette 7 kann alternativ als gesonderter, um die Lauffläche von Fahrzeugrädern laufender und ggf. gegen die Lauffläche festspannbarer Teil zur Anwendung gelangen.

Es sei schließlich erwähnt, daß die Schneekette und die übrigen belasteten Teile der Rutschsicherungsvorrichtung zweckmäßigerweise aus Metallmaterial, widerstandsfähigem Kunststoff oder einer Kombination davon ausgeführt sind.

**Patentansprüche**

1. Schneekette für Fahrzeugräder, wobei die Schneekette (7) zwei Gliederteile (19,20) aufweist, die längs der Umfangslauffläche des Fahrzeugrades (2) verlaufen sollen, wenn die Schneetkette (7) am Fahrzeugrad (2) montiert ist, und wobei die Schneekette (7) Querstäbe (21) aufweist, die die Gliederteile (19,20) miteinander verbinden und die in der Querrichtung der Lauffläche (16) verlaufen sollen, wenn die Schneekette (7) am Fahrzeugrad (2) montiert ist, und wobei ferner die Schneekette (7) vorzugsweise an gegenseitig zusammenklappbaren Armen (5a-5d) montiert ist, welche mittels einer Einziehvorrichtung (4) in eine Stellung in unmittelbarer Nähe einer Stirnseite (15) des Fahrzeugrades (2) einziehbar sind, dadurch gekennzeichnet, daß jeder Querstab (21) mit den zwei längs der Umfangsfläche (16) des Fahrzeugrades (2) verlaufenden Gliederteilen (19,20) nicht-drehbar verbunden ist, damit die Gliederteile (19,20) einer Drehung der Querstäbe (21) aus vorausbestimmten, vorzugsweise im Verhältnis zur Lauffläche (16) aufrechten Stellungen, wenn sich die Querstäbe beim Abrollen des Fahrzeugrades (2) zwischen der Lauffläche (16) und einer Oberfläche (Fahrbahn) (17) befinden, entgegenwirken.

2. Schneekette nach Anspruch 1, dadurch gekennzeichnet, daß jeder Querstab (21) mit einem Kettenglied (29) an jedem Gliederteil (19,20) nichtdrehbar verbunden ist, wobei jeder Querstab (21), bei auf dem Rad (2) montierter Schneekette (7), von den Gliederteilen (19,20) in einer aufrechten Stellung im Verhältnis zur Lauffläche (16) gehalten wird, während die mit dem Querstab (21) nichtdrehbar verbundenen Kettenglieder (29) liegende Stellungen im Verhältnis zur Lauffläche (16) einnehmen.

3. Schneekette nach Anspruch 1 oder 2, dadurch gekennzeichnet, daß ein Kettenglied (29) in jedem Gliederteil (19,20) mit jedem Querstab (21) dadurch nichtdrehbar verbunden ist, daß es zwischen zwei Klemmenteilen (26,27) an jedem Querstab (21) festgeklemmt ist.

4. Schneekette nach Anspruch 3, dadurch gekennzeichnet, daß zwei hauptsächlich parallel zueinander verlaufende Teile (30,31) der Kettenglieder (29) in einer von den Klemmenteilen (26,27) gebildeten, an dem einen Ende offenen Ausnehmung (28) angebracht sind, und daß ein Kettengliedteil (30) am Boden (32) der Ausnehmung (28) anliegt, während entgegengesetzte Kettengliedteile (31) an solchen Endteilen (26a,27a) der Klemmenteile (26,27) anliegen, die auf der Außenseite des in der Ausnehmung (28) am äußersten liegenden Kettengliedteils (31) gegeneinander gebogen sind.

5. Schneekette nach einem der vorhergehenden Ansprüche, dadurch gekennzeichnet, daß jeder Querstab (21) aus einem langgestreckten Flacheisen besteht, welches bei auf dem Rad (2) montierter Schneekette (7) von den Gliederteilen (19,20) hochkantig im Verhältnis zu der Lauffläche (16) gehalten wird, daß der Lauffläche (16) ab- und zugewandte Kanten (22,23) des Querstabs (21) Erhöhungen (24) und zwischen diesen gelegene Vertiefungen (25) aufweisen, daß die Erhöhungen (24) an der der Lauffläche (16) zugewandten Kante (22) Vertiefungen (25) in der der Lauffläche (16) abgewandten Kante (23) im wesentlichen bezüglich der Mitten gegenüber liegen und Vertiefungen (25) in der der Lauffläche (16) zugewandten Kante (22) Erhöhungen (24) an der der Lauffläche (16) abgewandten Kante (23) im wesentlichen bezüglich der Mitten gegenüber liegen, und daß die Querstäbe (21) gegenseitig so angeordnet sind, daß, in der Längsrichtung der Schneekette (7) gesehen, jede Erhöhung (24) an einem Querstab (21) jeder Vertiefung (25) in dem nächstgelegenen Querstab (21) im wesentlichen bezüglich der Mitten gegenüber liegen.

6. Schneekette nach Anspruch 5, dadurch gekennzeichnet, daß die Querstäbe (21) identisch sind und daß ihre Stellungen, mit den Erhöhungen (24) an einem Querstab (21) den Vertiefungen (25) in einem nächstgelegenen Querstab (21) im wesentlichen gegenüberliegend, dadurch erreicht sind, daß die Querstäbe (21) nach einer Drehung um 180° in bezug aufeinander mit den Gliederteilen (19, 20) nichtdrehbar verbunden sind.

7. Schneekette nach einem der vorhergehenden Ansprüche, dadurch gekennzeichnet, daß eine Anzahl von Kettengliedern (29), die zwei mit Querstäben (21) nichtdrehbar verbundene Kettenglieder (29) miteinander verbinden, eingerichtet sind, um bei auf dem Rad (2) montierter Schneekette (7) verschiedene Winkellagen im Verhältnis zur Lauffläche (16) einzunehmen.

8. Schneekette nach einem der vorhergehenden Ansprüche, wobei die Schneekette mehrere Kettenabschnitte aufweist, von denen jeder Abschnitt zwischen zwei Bügeln verläuft, die an Armen angebracht sind, welche bei auf dem Rad montierter Schneekette in unmittelbarer Nähe einer Lauffläche des Rades gelegen sind und in der Querrichtung der Lauffläche verlaufen, dadurch gekennzeichnet, daß jeder Kettenabschnitt (18a-18d) zwei Gliederteile (19 und 20) und mehrere, vorzugsweise vier, Querstäbe (21) aufweist, wobei die Gliederteile (19,20) bei auf dem Rad (2) montierter Schneekette (7) längs der Lauffläche (16) in deren Umfangsrichtung verlaufen, während die Querstäbe (21) in einer Richtung quer zur Umfangsrichtung verlaufen, wobei Kettenglieder (29) der Kettenabschnitte (18a-18d) an wenigstens einem der Bügel (6) abnehmbar angeordnet sind.

9. Schneekette nach Anspruch 8, dadurch gekennzeichnet, daß jeder Bügel (6) zwei Schenkel (35,41) aufweist, daß ein Kettenglied (29) eines jeden der beiden Gliederteile (19,20) in jedem Kettenabschnitt (18a-18d) an einem der Schenkel (35,41) angebracht ist und daß die Kettenglieder (29) von dem Schenkel (35 oder 41) abnehmbar sind, indem ein auf dem Bügel (6) fixierbares Verriegelungsglied (39) entriegelt wird.

10. Schneekette nach Anspruch 9, dadurch gekennzeichnet, daß jeder Schenkel (35,41) der Bügel (6) einen beschränkten Abschnitt (38,44) zur Anbringung zweier Kettenglieder (29) und des Verriegelungsgliedes (39) aufweist, wobei die Schenkel (35,41) von Hand entgegen einer Federkraft in Richtung aufeinander zu beweglich sind, um zu gestatten, daß das Verriegelungsglied (39) in eine Verriegelungslage gebracht wird, in welcher es zwischen die Kettenglieder (29) jedes Abschnittes (38,44) eingreift und diese Glieder daran hindert, den Abschnitt (38,44) zu verlassen, und daß das Verriegelungsglied (39) derart ausgebildet ist, daß es am Bügel (6) festgehalten wird, indem den Schenkeln (35,41) nach deren Zusammenführung gestattet wird, gegen zwei Flanschteile (46,47) des Verriegelungsgliedes (39) hinauszufedern, wenn die Schenkel (35,41) zwischen den genannten Flanschteilen (46,47) angebracht sind.

## Claims

1. Snow chain for vehicle wheels, the snow chain (7) having two link parts (19, 20) to extend longitudinally to the peripheral rolling surface of the vehicle wheel (2) when the snow chain (7) is mounted on the wheel (2), and cross bars (21) connecting the link parts (19, 20) to extend transversely to the rolling surface (16) when the snow chain (7) is mounted on the vehicle wheel (2), and whereby further the snow chain (7) is preferably mounted on mutually collapsible arms (5a - 5d) which may be retracted into a position in the immediate vicinity of a face (15) of the vehicle wheel (2) by means of retracting means (4), characterised in that each cross bar (21) is non-rotatably connected with the two link parts (19, 20) extending longitudinally to the peripheral surface (16) of the vehicle wheel (2), so that the link parts (19, 20) oppose a rotation of the cross bars (21) from predetermined, preferably upright positions relative to the rolling surface (16), when the cross bars lie between the rolling surface (16) and a surface (runway) (17), as the vehicle wheel rolls along.

2. Snow chain according to claim 1, characterised in that each cross bar (21) is non-rotatably connected with a chain link (29) on each link part (19, 20), whereby, when the snow chain (7) is mounted on the wheel, each cross bar (21) is held in an upright position relative to the rolling surface (16) by the link parts (19, 20), while the chain links (29) non-rotatably connected with the cross bar (21) take up lying positions relative to the rolling surface (16).

3. Snow chain according to claim 1 or 2, characterised in that a chain link (29) in each link part (19, 20) is non-rotatably connected with each cross-bar (21) in that it is clamped on each cross-bar (21) between two clamping parts (26, 27).

4. Snow chain according to claim 3, characterised in that two parts (30, 31) of the chain links (29) extending essentially in parallel to each other are attached in a recess (28) formed by the clamping parts (26, 27) and open at one end, and in that one chain link part (30) is supported at the bottom (32) of recess (28), while opposing chain link parts (31) are supported at such end parts (26a, 27a) of the clamping parts (26, 27), as are bent towards each other on the outside of the outermost chain link part (31) in the recess (28).

5. Snow chain according to one of the preceding claims, characterised in that each cross-bar (21) consists of an elongated flat iron held in an upright position relative to the rolling surface (16) by the link parts (19, 20) when the snow chain (7) is mounted on the wheel (2), in that edges (22, 23) of the cross-bar (21) facing away from and facing the rolling surface (16) have lobes (24) and recesses (25) between the lobes, in that the lobes (24), on the edge (22) facing the rolling surface (16), lie opposite recesses (25) in the edge (23) facing away from the rolling surface (16) essentially with regard to the centres and recesses (25) in the edge (22) facing the rolling surface (16) lie opposite lobes (24) on the edge (23) facing away from the rolling surface (16) essentially with regard to the centres, and in that the cross-bars (21), in relation to each other are arranged such that, viewed in longitudinal direction of the snow chain (7), each lobe (24) on a cross-bar (21) lies opposite each recess (25) in the nearest cross-bar (21) essentially with regard to the centres.

6. Snow chain according to claim 5, characterised in that the cross-bars (21) are identical and in that their positions, with the lobes (24) on one cross-bar (21) lying essentially opposite the recesses (25) in the nearest cross-bar (21), are achieved in that the cross-bars (21), after rotation through 180° relative to each other, are non-rotatably connected with the link parts (19, 20).

7. Snow chain according to one of the preceding claims, characterised in that a number of chain links (29) connecting two chain links (29) non-rotatably connected by cross-bars (21) are adjusted in order to take up different angular positions relative to the rolling surface (16) when the snow chain is mounted on the wheel (2).

8. Snow chain according to one of the preceding claims, whereby the snow chain has several chain sections, with each section extending between two shackles attached to arms which are situated in the immediate vicinity of a rolling surface of the wheel when the snow chain is mounted on the wheel, and which extend transversely to the rolling surface, characterised in that each chain section (18a - 18d) has two link parts (19 and 20) and several, preferably four, cross-bars (21), whereby the link parts (19, 20) extend longitudinally to the rolling surface (16) in peripheral direction thereof, when the snow chain (7) is mounted on the wheel (2), while the cross-bars (21) extend in a direction transversely to the peripheral direction, whereby chain links (29) of the chain sections (18a - 18d) are detachably arranged on at least one shackle (6).

9. Snow chain according to claim 8, characterised in that each shackle (6) has two shanks (35, 41), in that one chain link (29) of each of the two link parts (19, 20) in each chain section (18a - 18d) is attached to one of the shanks (35, 41) and in that the chain links (29) are detachable from the shank (35 or 41) by unlocking a locking link (39) fixable on the shackle (6).

10. Snow chain according to claim 9, characterised in that each shank (35, 41) of the shackles (6) has a restricted section (38, 44) for attaching two chain links (29) and the locking link (39), whereby the shanks (35, 41) can be manually moved in direction towards each other against a spring tension, in order to allow the locking link (39) to be moved in a locking position, in which it engages between the chain links (29) of each section (38, 44) and prevents these links from leaving the section (38, 44) and in that the locking link (39) is shaped so as to be retained on the shackle (6) by allowing the shanks (35, 41), after bringing them together, to spring back against two flange parts (46, 47) of the locking link (39), when the shanks (35, 41) are attached between said flange parts (46, 47).

**Revendications**

1. Chaîne anti-neige pour roues de véhicules, où la chaîne anti-neige (7) comporte deux éléments articulés (19,20) qui doivent s'étendre le long de la surface périphérique de roulement de la roue (2) du véhicule quand la chaîne anti-neige est montée sur la roue (2) du véhicule, et où la chaîne anti-neige (7) comporte des barres transversales (21) qui relient les éléments articulés (19,20) entre eux et qui doivent être orientées dans la direction transversale par rapport à la surface de roulement (16) quand la chaîne anti-neige (7) est montée sur la roue (2) du véhicule, et en outre, où la chaîne anti-neige (7) est montée de préférence sur des bras (5a-5d) repliables les uns sur les autres, qui peuvent être ramenés en arrière, au moyen d'un dispositif de retrait (4), dans une position à proximité directe d'un côté frontal (15) de la roue (2) du véhicule, caractérisée en ce que chaque barre transversale (21) est reliée, de façon non-rotative, aux deux éléments articulés (19,20) s'étendant le long de la surface périphérique de roulement, de façon à ce que les éléments articulés (19,20) empêchent une rotation des barres transversales (21) hors de positions prédéterminées, de préférence sur chant par rapport à la surface de roulement (16), quand les barres transversales se trouvent entre la surface de roulement (16) et une surface (chaussée) (17) lorsque la roue (2) du véhicule tourne.

2. Chaîne anti-neige selon la revendication 1, caractérisée en ce que chaque barre transversale (21) est reliée à un maillon de chaîne (29) de chaque élément articulé (19,20), la barre transversale (21) étant maintenue dans une position sur chant, par rapport à la surface de roulement (16), par les éléments articulés (19,20), lorsque la chaîne anti-neige (7) est montée sur la roue (2), tandis que les maillons de chaîne (29), reliés à la barre transversale (21) de façon non-rotative, prennent une position couchée par rapport à la surface de roulement (16).

3. Chaîne anti-neige selon la revendication 1 ou 2, caractérisée en ce qu'un maillon de chaîne (29) de chaque élément articulé (19,20) est relié à chaque barre transversale (21) de façon non-rotative du fait qu'il est bloqué entre deux éléments de serrage (26,27) sur chaque barre transversale (21).

4. Chaîne anti-neige selon la revendication 3, caractérisée en ce que deux parties (30,31) des maillons de chaîne (29), orientées de façon substantiellement parallèle l'une par rapport à l'autre, sont logées dans un évidement (28) formé par les éléments de serrage (26, 27) et ouvert à une de ses extrémités, et qu'une partie de maillon de chaîne (30) repose sur la base (32) de l'évidement (28), tandis que des parties de maillons de chaînes opposés (31) reposent sur de telles parties d'extrémité (26a,27a) des éléments de serrage (26,27), qui sont recourbés l'un vers l'autre sur la face externe de la partie de maillon de chaîne (31) située le plus à l'extérieur de l'évidement (28).

5. Chaîne anti-neige selon une des revendications précédentes, caractérisée en ce que chaque barre transversale (21) est formée d'un acier plat très allongé, qui est maintenu de chant par les éléments articulés (19,20), par rapport à la surface de roulement (16), lorsque la roue (2) est montée sur la chaîne anti-neige, que des bords (22,23) de la barre transversale (21), opposés à la surface de roulement (16) ou tournés vers celle-ci, comportent des saillies (24) et des renfoncements (25) disposés entre celles-ci, que les saillies (24) adjacentes au bord (22) tourné vers la surface de roulement (16) et des renfoncements (25) adjacents au bord (23) opposé à la surface de roulement (16) sont disposés pratiquement les uns en face des autres, par rapport à leur centre, et que des renfoncements (25) adjacents au bord (22) tourné vers la surface de roulement (16) et des saillies (24) adjacentes au bord (23) opposé à la surface de roulement (16) sont disposés pratiquement les uns en face des autres, par rapport à leur centre, et que les barres transversales (21) sont disposées les unes par rapport aux autres d'une manière telle que, dans le sens longitudinal de la chaîne anti-neige (7), chaque saillie (24) d'une barre transversale (21) est située pratiquement en face de chaque renfoncement (25) de la barre transversale (21) suivante, par rapport à leur centre.

6. Chaîne anti-neige selon la revendication 5, caractérisée en ce que les barres transversales (21) sont identiques et qu'elles atteignent leur position, avec les saillies (24) d'une barre transversale (21) situées essentiellement en face des renfoncements (25) de la barre transversale (21) suivante, du fait que les barres transversales (21), après une rotation de 180° les unes par rapport aux autres, sont reliées aux éléments articulés (19,20) de façon non-rotative.

7. Chaîne anti-neige selon une des revendications précédentes, caractérisée en ce qu'un certain nombre de maillons de chaîne (29), qui relient deux maillons de chaîne (29) à des barres transversales (21) de façon non-rotative, sont agencés de façon à prendre différentes positions angulaires, par rapport à la surface de roulement (16), lorsque la chaîne anti-neige (7) est montée sur la roue (2).

8. Chaîne anti-neige selon une des revendications précédentes, comportant plusieurs sections de chaîne dont chacune s'étend entre deux étriers qui sont montés sur des bras qui sont placés au voisinage immédiat d'une surface de roulement de la roue, lorsque la chaîne anti-neige est montée sur la roue, et s'étendent dans la direction transversale par rapport à la surface de roulement, caractérisée en ce que chaque section de chaîne (18a-18d) comporte deux éléments articulés (19 et 20) et plusieurs barres transversales (21), de préférence quatre, les éléments articulés (19, 20) s'étendant le long de la surface de roulement (16), dans la direction périphérique de celle-ci, lorsque la chaîne anti-neige (7) est montée sur la roue (2), tandis que les barres transversales (21) s'étendent dans une direction transversale par rapport à la direction périphérique, des maillons de chaîne (29) des sections de chaîne (18a-18d) étant disposés de façon amovible sur au moins un des étriers (6).

9.  Chaîne anti-neige selon la revendication 8, caractérisée en ce que chaque étrier (6) comporte deux branches (35, 41), qu'un maillon de chaîne (29) de chacun des deux éléments articulés (19, 20) est monté sur une des branches (35, 41) dans chaque section de chaîne (18a-18d) et que les maillons de chaîne (29) peuvent être retirés de la branche (35 ou 41) par déverrouillage d'un élément de verrouillage (39) pouvant être fixé sur l'étrier (6).

10. Chaîne anti-neige selon la revendication 9, caractérisée en ce que chaque branche (35, 41) des étriers (6) comporte une section limitée (38, 44) pour recevoir deux maillons de chaîne (29) et l'élément de verrouillage (39), les branches (35, 41) pouvant être déplacées manuellement l'une vers l'autre, contre un effet de ressort, pour permettre que l'élément de verrouillage (39) soit amené dans une position de verrouillage, dans laquelle il s'engage entre les maillons de chaîne (29) de chaque section (38, 44) et empêche ces maillons de sortir de la section (38, 44), et que l'élément de verrouillage (39) est conformé d'une manière telle qu'il est fixé à l'étrier (6) en permettant aux branches (35, 41), après leur jonction, de s'écarter en faisant ressort contre deux éléments de bride (46, 47) de l'élément de verrouillage (39) quand les branches (35, 41) sont placées entre lesdits éléments de bride (46, 47).

Fig. 1

## Fig. 2

## Fig. 3

Fig. 4

Fig. 5

## Fig. 6

Fig. 7

Fig. 8

Fig. 9

EP 0 226 131 B1